# EUROPÄISCHE PATENTSCHRIFT

(11) **EP 4 370 326 B1**
(45) Veröffentlichungstag und Bekanntmachung des Hinweises auf die Patenterteilung: **19.02.2025**
(21) Anmeldenummer: 22733389.5
(22) Anmeldetag: 10.06.2022
(51) Int. Cl.: B32B 17/10, B60J 1/17

(54) **VERBUNDSCHEIBE MIT OPAKEM MASKIERUNGSBEREICH UND TEILTRANSPARENTER REFLEKTIERENDER BESCHICHTUNG**
LAMINATED GLAZING WITH OPAQUE MASKING AREA AND PARTIALLY TRANSPARENT REFLECTIVE COATING
VITRE COMPOSITE POURVUE DE ZONE DE MASQUAGE OPAQUE ET DE REVÊTEMENT RÉFLÉCHISSANT PARTIELLEMENT TRANSPARENT

(30) Priorität: 12.07.2021 EP 21184948
(43) Veröffentlichungstag der Anmeldung: 22.05.2024
(73) Patentinhaber: Saint-Gobain Glass France, 92400 Courbevoie (FR)
(72) Erfinder: JAMART, Juliette Pascale, 60200 Compiegne (FR); JACQUES, Florence, 52062 Aachen (DE)
(74) Vertreter: Feist, Florian Arno
(86) Internationale Anmeldenummer: PCT/EP2022/065843
(87) Internationale Veröffentlichungsnummer: WO 2023/285044

(56) Entgegenhaltungen:
- WO-A1-2014/174308
- WO-A1-2020/094324

## Beschreibung

Die Erfindung betrifft eine Verbundscheibe mit einem transparenten Durchsichtsbereich und einem opaken Maskierungsbereich sowie deren Verwendung.

Verbundscheiben sind im Fahrzeug- und Architekturbereich als Verglasungen üblich. Sie bestehen aus einer Außenscheibe und einer Innenscheibe, die über eine thermoplastische Zwischenschicht miteinander verbunden sind. Häufig sind dabei verschieden geartete Funktionselemente in die Zwischenschicht eingelagert, welche die Verbundscheibe mit einer gewünschten Funktion versehen. Ein Beispiel für solche Funktionselemente sind IR-reflektierende und/oder beheizbare Beschichtungen. Ein weiteres Beispiel sind Funktionselemente mit elektrisch steuerbaren optischen Eigenschaften, beispielsweise SPD-Funktionselemente (*suspended particle device*), PDLC-Funktionselemente (*polymer dispersed liquid crystal*) oder elektrochrome Funktionselemente. Die optischen Eigenschaften solcher Funktionselemente und der damit ausgestatteten Verbundscheiben, insbesondere deren Lichttransmission oder Lichtstreuung, kann durch eine angelegte elektrische Spannung gesteuert werden.

Die Seitenkanten der Funktionselemente erstrecken sich typischerweise nicht bis zu den Seitenkanten der Verbundscheibe, damit die Funktionselemente sicher und geschützt vor Korrosion und Beschädigung in der Verbundscheibe eingelagert sind. Befände sich die Seitenkante des Funktionselements im Durchsichtsbereich der Verbundscheibe, so würde sie dem Betrachter störend auffallen und den ästhetischen Wert der Verbundscheibe herabsetzen. Dies gilt in besonderem Maße für Funktionselemente, die elektrisch kontaktiert werden müssen, beispielsweise beheizbare Schichten oder Funktionselemente mit elektrisch steuerbaren optischen Eigenschaften. Die elektrische Kontaktierung erfolgt in der Regel mittels Stromsammelschienen und elektrischen Kabeln, welche ebenfalls für den Betrachter nicht sichtbar sein sollten. Es ist daher üblich, die Verbundscheibe mit einem opaken Maskierungsbereich zu versehen, typischerweise umlaufend in einem peripheren Randbereich, mit dem die Seitenkante des Funktionselements sowie eine etwaige elektrische Kontaktierung gleichsam versteckt wird. Der Maskierungsbereich wird typischerweise durch einen opaken, meist schwarzen Abdeckdruck auf der Außenscheibe und der Innenscheibe ausgebildet. Beispielhaft sei auf WO2017157626A1 verwiesen.

Auch WO2020094324A1 und WO2014174308A1 offenbaren Verbundscheiben mit eingelagerten Funktionselementen und opaken Maskierungsbereichen.

Im Fahrzeugbereich sind solche opaken Maskierungsbereich für Windschutzscheiben, Heckscheiben und Dachscheiben seit langem üblich, um den zum Einbau verwendeten Klebstoff vor UV-Strahlung zu schützen. Bei anderen Scheiben, beispielsweise bei Fahrzeug-Seitenscheiben oder Gebäudeverglasungen, sind Maskierungsbereiche dagegen nicht üblich und fallen dem Betrachter daher als ungewöhnlich und optisch wenig ansprechend auf. Es besteht daher Bedarf an Verbundscheiben mit opaken Maskierungsbereichen, welche ästhetisch ansprechend sind und vom Betrachter als wenige störend empfunden werden.

Aus den nachveröffentlichten internationalen Patentanmeldungen WO2022117955A1 und WO2022073894A1 sind aufgedruckte teiltransparente reflektierende Beschichtungen bekannt, welche Metalloxide enthalten.

Der vorliegenden Erfindung liegt die Aufgabe zugrunde, eine verbesserte Verbundscheibe mit einem Funktionselement, einem transparenten Durchsichtsbereich und einem opaken Maskierungsbereich bereitzustellen, bei welcher der Maskierungsbereich ästhetisch ansprechend gestaltet ist.

Die Aufgabe wird gelöst durch eine Verbundscheibe gemäß dem unabhängigen Anspruch 1. Bevorzugte Ausgestaltungen gehen aus den Unteransprüchen hervor.

Die erfindungsgemäße Verbundscheibe umfasst mindestens eine Außenscheibe und eine Innenscheibe, die über eine thermoplastische Zwischenschicht miteinander verbunden sind. Die Verbundscheibe ist dafür vorgesehen, in einer Fensteröffnung (insbesondere einer Fensteröffnung eines Fahrzeugs, alternativ aber auch einer Fensteröffnung eines Gebäudes oder eines Raums) den Innenraum gegenüber der äußeren Umgebung abzutrennen. Mit Innenscheibe wird im Sinne der Erfindung die dem Innenraum zugewandte Scheibe bezeichnet. Mit Außenscheibe wird die der äußeren Umgebung zugewandte Scheibe bezeichnet. Die Außenscheibe und die Innenscheibe weisen jeweils eine außenseitige und eine innenraumseitige Oberfläche auf und eine dazwischen verlaufende, umlaufende Seitenkantenfläche. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Die Außenscheibe und die Innenscheibe sind bevorzugt Glasscheiben, besonders bevorzugt gefertigt aus Kalk-Natron-Glas, wie es für Fensterscheiben üblich ist. Eine oder beide der Scheiben können aber auch aus anderen Glassorten gefertigt sein, beispielsweise Quarzglas, Borosilikatglas oder Aluminosilikatglas, oder aus starren klaren Kunststoffen, beispielsweise Polycarbonat oder Polymethylmethacrylat. Die Scheiben können klar sein oder auch getönt oder gefärbt. Die Dicken der Außenscheibe und der Innenscheibe betragen unabhängig voneinander bevorzugt von 0,5 mm bis 5 mm, besonders bevorzugt von 1 mm bis 3 mm.

Die Zwischenschicht ist bevorzugt aus mindestens einer thermoplastischen Folie (Verbindefolie) ausgebildet. Die mindestens eine Folie (Verbindefolie) sind bevorzugt auf Basis von Polyvinylbutyral (PVB), Ethylenvinylacetat (EVA), oder Polyurethan (PU), besonders bevorzugt auf Basis von PVB. Das bedeutet, dass die Folie mehrheitlich das besagte Material enthält (Anteil von größer als 50 Gew.-%) und daneben optional weitere Bestandteile enthalten kann, beispielsweise Weichmacher, Stabilisatoren, UV- oder IR-Absorber. Die Dicke jeder thermoplastischen Folie beträgt bevorzugt von 0,2 mm bis 2 mm, besonders bevorzugt von 0,3 mm bis 1 mm. Beispielsweise können Folien, insbesondere PVB-Folien, mit den Standarddicken von 0,38 mm oder 0,76 mm verwendet werden.

Die erfindungsgemäße Verbundscheibe weist einen opaken Maskierungsbereich und einen transparenten Durchsichtsbereich auf. Mit Maskierungsbereich wird im Sinne der Erfindung ein Bereich der Verbundscheibe bezeichnet, durch den eine Durchsicht nicht möglich ist. Die Lichttransmission des Maskierungsbereichs beträgt bevorzugt im Wesentlichen 0%. Mit Durchsichtsbereich wird im Sinne der Erfindung ein Bereich der Glasscheibe bezeichnet, der eine Durchsicht durch die Glasscheibe ermöglicht und der daher eine gewisse Transparenz oder zumindest Transluzenz aufweist. Die Lichttransmission des Durchsichtsbereichs beträgt bevorzugt mindestens 10%, besonders bevorzugt mindestens 20%. Sollte das erfindungsgemäße Funktionselement elektrisch steuerbare optische Eigenschaften aufweisen, so beziehen sich diese Angaben auf den transparenten Zustand des Funktionselements (maximale Lichttransmission und/oder minimale Lichtstreuung).

In einer typischen Ausgestaltung umgibt der Maskierungsbereich den Durchsichtsbereich rahmenartig. Der Maskierungsbereich ist also umlaufend um den Durchsichtsbereich angeordnet. Typischerweise bildet der Maskierungsbereich dabei zumindest abschnittsweise den Randbereich der Verbundscheibe. Damit ist gemeint, dass der Maskierungsbereich zumindest an einen Abschnitt der Seitenkante der Verbundscheibe angrenzt.

Der Maskierungsbereich ist durch ein opakes Element ausgebildet, welches außenseitig zum Funktionselement angeordnet ist. Das bedeutet, dass das besagte opake Element einen geringeren Abstand zur äußeren Umgebung aufweist als das Funktionselement. Der Blick auf die Seitenkante des Funktionselements von außen wird dadurch verhindert.

In einer bevorzugten Ausgestaltung ist der Maskierungsbereich durch einen Abdeckdruck auf der zur Zwischenschicht hingewandten, innenraumseitigen Oberfläche der Außenscheibe ausgebildet. Anders ausgedrückt ist die innenraumseitige Oberfläche der Innenscheibe mit dem Abdeckdruck versehen, wodurch die Durchsicht durch die Verbundscheibe verhindert wird und der Maskierungsbereich entsteht. Solche Abdeckdrucke sind insbesondere im Fahrzeugbereich verbreitet, insbesondere für Windschutzscheiben, Heckscheiben und Dachscheiben. Der Abdeckdruck enthält typischerweise ein Pigment und Glasfritten Die Glasfritten können aufgeschmolzen und der Abdeckdruck dadurch dauerhaft mit der Glasoberfläche verbunden (verschmolzen) werden. Das Pigment sorgt für die Opazität des Maskierungsbereichs. Der Abdeckdruck wird bevorzugt auf die Außenscheibe aufgedruckt, insbesondere im Siebdruckverfahren. Das Pigment ist typischerweise ein Schwarzpigment, beispielsweise Pigmentruß (*Carbon Black*), Anilinschwarz, Beinschwarz, Eisenoxidschwarz, Spinellschwarz und/oder Graphit. Der Abdeckdruck weist bevorzugt eine Dicke von 5 µm bis 50 µm auf, besonders bevorzugt von 8 µm bis 25 µm. Die Innenscheibe kann optional ebenfalls mit einem Abdeckdruck versehen sein, insbesondere ihre innenraumseitige Oberfläche.

Alternativ ist es aber auch möglich, den Maskierungsbereich durch eine getönte oder gefärbte Folie in der Zwischenschicht auszubilden. So kann beispielsweise mindestens eine thermoplastische Verbindefolie zwischen dem Funktionselement und der Außenscheibe im Maskierungsbereich getönt sein beziehungsweise eine Verbindeschicht aus mehreren Abschnitten unterschiedlicher Folien zusammengesetzt sein, wobei im Maskierungsbereich eine getönte und im Durchsichtsbereich eine klare Folie verwendet wird. Alternativ kann auch eine opake Folie in die Zwischenschicht zwischen dem Funktionselement und der Außenscheibe eingelegt werden.

Optional kann auch innenraumseitig zum Funktionselement ein weiteres opakes Element im Maskierungsbereich angeordnet sein. Dadurch wird auch der Blick auf die Seitenkante des Funktionselements von innen verhindert. Beispielsweise kann auch die Innenscheibe mit einem Abdeckdruck versehen sind, insbesondere ihre innenraumseitige Oberfläche, oder es kann eine opake Folie zwischen Funktionselement und Innenscheibe vorhanden sein.

Die Zwischenschicht weist, neben den Verbindefolien, ein Funktionselement auf. Anders ausgedrückt enthält die Zwischenschicht ein Funktionselement, ist die Zwischenschicht mit einem Funktionselement ausgestattet oder ist ein Funktionselement in die Zwischenschicht eingelagert. Das Funktionselement ist also zwischen der Außenscheibe und der Innenscheibe angeordnet und kann optional in direktem Berührungskontakt mit der zur Zwischenschicht hingewandten Oberfläche der Außenscheibe und/oder der Innenscheibe haben. Das Funktionselement ist insbesondere flächig zwischen der Außenscheibe und der Innenscheibe angeordnet, im Wesentlichen parallel zu den besagten Scheiben.

Unter einem Funktionselement wird im Sinne der Erfindung ein flächiges, insbesondere schicht- oder folienartiges Element oder Bauteil verstanden, welches den Durchsichtsbereich der Verbundscheibe mit einer zusätzlichen Funktion oder Eigenschaft versieht. Dies kann beispielsweise die Farbe betreffen, die Wirkung auf elektromagnetische Strahlung, eine Heizfunktion oder die Möglichkeit, die optischen Eigenschaften (insbesondere den Grad der Lichttransmission oder Lichtstreuung) elektrisch zu steuern.

Das Funktionselement deckt den gesamten Durchsichtsbereich der Verbundscheibe ab. Damit ist gemeint, dass das Funktionselement derart zwischen der Außenscheibe und der Innenscheibe angeordnet ist, dass der gesamte Durchsichtsbereich mit dem Funktionselement versehen ist. Licht, dass durch den Durchsichtsbereich der Verbundscheibe hindurchtritt, tritt also zwangsläufig immer auch durch das Funktionselement hindurch.

Erfindungsgemäß erstreckt sich zumindest ein Bereich der Seitenkante des Funktionselements sich nicht bis zur Seitenkante der Verbundscheibe. Zumindest ein Bereich der Seitenkante des Funktionselements ist also nicht bündig mit der Seitenkante der Verbundscheibe angeordnet, welche wiederum durch die (im Wesentlichen bündigen) Seitenkante der Innenscheibe, der Außenscheibe und der Zwischenschicht gebildet wird. Stattdessen ist der besagte Bereich der Seitenkante des Funktionselements gegenüber der Seitenkante der Verbundscheibe zurückgesetzt und im Maskierungsbereich angeordnet. Das Funktionselement weist also eine Fläche auf, die größer ist also diejenige des Durchsichtsbereichs, aber kleiner als diejenige der gesamten Verbundscheibe.

Typischerweise erstreckt sich die gesamte umlaufende Seitenkante des Funktionselements nicht bis zur Seitenkante der Verbundscheibe, sondern ist im Maskierungsbereich angeordnet. Es liegt also kein Bereich der Seitenkante des Funktionselements vor, der mit der Seitenkante der Verbundscheiben bündig angeordnet ist. Die umlaufende Seitenkante des Funktionselements ist also gleichsam gegenüber der Seitenkante der Verbundscheibe zurückgesetzt. Der Abstand der Seitenkante des Funktionselements zur Seitenkante der Verbundscheibe beträgt in einer vorteilhaften Ausgestaltung mindestens 15 mm, um eine stabile Verbindung von Außenscheibe und Innenscheibe im Randbereich zu gewährleisten und das Eindringen von Feuchtigkeit in das Funktionselement zu verhindern.

Dadurch, dass sich die Seitenkante des Funktionselements nicht bis zur Seitenkante der Verbundscheibe erstreckt, kann ein direkter Kontakt zwischen dem Funktionselement und der umgebenden Atmosphäre verhindert werden. Das Funktionselement ist stattdessen vollständig in der Verbundscheibe eingelagert. Dies ist besonders dann vorteilhaft, wenn die das Funktionselement metallische Bestandteile enthält, welche bei Kontakt zur Atmosphäre korrodieren können. In einer besonders vorteilhaften Ausgestaltung enthält das Funktionselement daher Metall, insbesondere mindestens eine Dünnschicht auf Basis eines Metalls.

Dadurch, dass die Seitenkante des Funktionselements im Maskierungsbereich angeordnet ist, ist sie für den Betrachter nicht sichtbar. Eine sichtbare Seitenkante würde störend auffallen und den ästhetischen Wert der Verbundscheibe herabsetzen.

Erfindungsgemäß weist die von der Zwischenschicht abgewandte, außenseitige Oberfläche der Außenscheibe im Maskierungsbereich ein Muster von beschichteten Bereichen auf, welche mit einer teiltransparenten reflektierenden Beschichtung versehen sind. Das besagte Muster ist zumindest in einem Abschnitt des Maskierungsbereichs vorhanden und kann sich optional über den Maskierungsbereich hinaus auf den Durchsichtsbereich erstrecken. Durch einen außenseitigen Betrachter ästhetisch ansprechender gestaltet. Das ist der große Vorteil der Erfindung. Der Maskierungsbereich fällt dann weniger störend auf. Dies ist insbesondere für solche Scheiben besonders vorteilhaft, bei denen üblicherweise kein Maskierungsstreifen vorhanden ist, die den Betrachter also in besonderem Maße störend auffallen würden (beispielsweise Verbundscheiben im Architekturbereich oder Fahrzeug-Seitenscheiben, insbesondere heb- und senkbare Seitenscheiben). Die von der Zwischenschicht abgewandte, innenraumseitige Oberfläche der Innenscheibe kann optional ebenfalls mit einem Muster von beschichteten Bereichen mit der teiltransparenten reflektierenden Beschichtung versehen sein, wodurch der Maskierungsbereich auch für einen innenraumseitigen Betrachter ästhetischer gestaltet wird.

Unter einer teiltransparenten reflektierenden Beschichtung wird im Sinne der Erfindung eine Beschichtung verstanden, welche einen signifikanten Anteil der auf sie treffenden elektromagnetischen Strahlung im sichtbaren Spektralbereich von 380 nm bis 780 nm transmittiert und einen ebenfalls signifikanten Anteil besagter Strahlung reflektiert, so dass die integrierte Lichttransmission und die integrierte Lichtreflexion jeweils mindestens 10%, bevorzugt mindestens 15%, besonders bevorzugt mindestens 20% betragen, gemessen mit einer Lichtquelle D65, wenn die Beschichtung auf eine klare Kalk-Natron-Glasscheibe mit einer Dicke von 3,85 mm aufgebracht ist. Die Lichtreflexion wird dabei unter einem Einstrahl- und Beobachtungswinkel von 10° gemessen, wobei neben der gerichteten Reflexion auch die diffuse Reflexion berücksichtigt wird. Besonders bevorzugt beträgt die integrierte Lichttransmission unter den genannten Bedingungen von 60% bis 90%, insbesondere von 70% bis 80%, und die integrierte Lichtreflexion von 10% bis 40%, insbesondere von 20% bis 30%.

Mit dem Muster von beschichteten Bereichen ist gemeint, dass im Maskierungsbereich neben den beschichteten Bereichen auch unbeschichtete Bereiche vorliegen, welche nicht mit der teiltransparenten reflektierenden Beschichtung versehen sind. Der Maskierungsbereich ist also nicht vollständig mit der teiltransparenten reflektierenden Beschichtung versehen. Das Muster ist bevorzugt derart gestaltet, dass die beschichteten Bereiche untereinander nicht zusammenhängen. Stattdessen sind die beschichteten Bereiche derart voneinander isoliert, dass jeder beschichtete Bereich von den anderen durch einen insgesamt zusammenhängenden unbeschichteten Bereich getrennt ist. Die beschichteten Bereiche sind gleichsam inselartig ausgebildet. Das Muster von beschichteten Bereiche ist bevorzugt derart ausgestaltet, dass die Flächenbelegung der beschichteten Bereiche (also der Anteil beschichteter Bereiche an der Gesamtfläche des Musters) von 5% bis 90% beträgt, besonders bevorzugt von 10% bis 50%, ganz besonders bevorzugt von 20% bis 40%.

Die beschichteten Bereiche können beispielsweise in Form geometrische Figuren ausgebildet sein oder in Form von Symbolen oder Logos, beispielsweise das Firmenlogo des Glasherstellers oder Fahrzeugherstellers (im Falle eine Fahrzeugscheibe).

Die Ausdehnung jedes beschichteten Bereichs beträgt bevorzugt mindestens 0,2 mm, besonders bevorzugt mindestens 0,4 mm, ganz besonders bevorzugt von 0,4 mm bis 15 mm. Der Abstand benachbarter beschichteter Bereiche beträgt bevorzugt mindestens 0,5 mm, und der Abstand der beschichteten Bereiche von der Seitenkante der Verbundscheibe bevorzugt mindestens 1,5 mm.

Das Funktionselement kann auf unterschiedliche Art ausgebildet sein. In einer Ausgestaltung wirkt das Funktionselement reflektierend auf elektromagnetische Strahlung, die durch den Durchsichtsbereich tritt, insbesondere auf infrarote (IR) oder ultraviolette Strahlungsanteile. Dadurch kann der thermische Komfort im Innenraum verbessert werden, indem eine übermäßige Aufheizung infolge der Sonneneinstrahlung vermieden wird. Das Funktionselement kann beispielsweise eine Beschichtung sein, welche auf der innenraumseitigen Oberfläche der Außenscheibe oder auf der außenseitigen Oberfläche der Innenscheibe aufgebracht ist. Besonders bevorzugt ist die Beschichtung eine IR-reflektierende Beschichtung, welche aus einem Stapel dünner Schichten besteht, der mindestens eine Schicht auf Basis eines Metalls enthält, insbesondere auf Basis von Silber. Das Funktionselement kann auch eine beschichtete Polymerfolie sein, wobei eine Trägerfolie mit einer solchen IR-reflektierenden Beschichtung versehen ist. Die Trägerfolie ist üblicherweise auf Basis von Polyethylenterephthalat (PET) ausgebildet und weist eine Dicke von 20 µm bis 200 µm auf. Die beschichtete Polymerfolie ist bevorzugt zwischen zwei Verbindefolien der Zwischenschicht angeordnet.

In einer weiteren Ausgestaltung weist das Funktionselement eine Heizfunktion auf, so dass die Verbundscheibe elektrisch beheizt werden kann. Bevorzugt wird hierbei eine Dünnschicht-Beschichtung verwendet von der Art, wie sie vorstehend als IR-reflektierende Beschichtung beschrieben wurde, entweder abgeschieden auf die Außenscheibe oder die Innenscheibe oder auf einer Trägerfolie. Die elektrisch leitfähige Beschichtung wird elektrisch kontaktiert und mit einer externen Spannungsquelle verbunden, so dass sie durch einen elektrischen Stromfluss erwärmt werden kann. Die beiden Pole der Spannungsquelle sind typischerweise an einander gegenüberliegenden Seitenkanten der Beschichtung angeschlossen.

Das Funktionselement kann auch eine gefärbte Beschichtung oder eine gefärbte, beschichtete oder bedruckte Folie sein, um die Farbe des Durchsichtsbereichs zu verändern.

In einer weiteren Ausgestaltung ist weist das Funktionselement elektrisch steuerbare optische Eigenschaften auf. Ein solches Funktionselement enthält eine aktive Schicht oder Schichtfolge, welche zwischen einer ersten und einer zweiten Flächenelektrode angeordnet ist. Die aktive Schicht oder Schichtenfolge weist die veränderlichen optischen Eigenschaften auf, welche durch eine an die Flächenelektroden angelegte elektrische Spannung gesteuert werden können. Die veränderlichen optischen Eigenschaften betreffen insbesondere den Grad der Lichttransmission und/oder den Grad der Lichtstreuung, wobei unter Licht im Sinne der Erfindung insbesondere sichtbares Licht im Spektralbereich von 380 nm bis 780 nm verstanden wird. Unter elektrisch steuerbaren optischen Eigenschaften werden im Sinne der Erfindung insbesondere solche Eigenschaften verstanden, die stufenlos steuerbar sind. Grundsätzlich ist es aber auch denkbar, dass die elektrisch steuerbaren optischen Eigenschaften nur zwischen zwei diskreten Zuständen geschaltet werden können. Ebenso ist es denkbar, dass die elektrisch steuerbaren optischen Eigenschaften zwischen mehr als zwei diskreten Zuständen geschaltet werden können.

Das elektrisch steuerbare Funktionselement kann ein PDLC-Funktionselement (*polymer dispersed liquid crystal*) sein. PDLC-Funktionselemente enthalten eine aktive Schicht zwischen den Flächenelektroden. Die aktive Schicht ist eine PDLC-Schicht und enthält Flüssigkristalle, welche in eine Polymermatrix eingelagert sind. PDLC-Funktionselemente werden typischerweise mit Wechselspannung betrieben. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Ein solches Funktionselement ist beispielsweise aus DE 102008026339 A1 bekannt. Der Ausdruck PDLC ist im Sinne der Erfindung breit auszulegen und schließt artverwandte Funktionselemente ein, die auf der Ausrichtung von Flüssigkristallen beruhen, beispielsweise PNLC-Funktionselemente (*polymer networked liquid crystal*).

Das elektrisch steuerbare Funktionselement kann alternativ ein SPD-Funktionselement (*suspended particle device*) sein. SPD-Funktionselemente enthalten eine aktive Schicht zwischen den Flächenelektroden. Die aktive Schicht enthält suspendierte Partikel, welche bevorzugt in eine zähflüssige Matrix eingelagert sind. SPD-Funktionselemente werden mit Wechselspannung betrieben. Die Absorption von Licht durch die aktive Schicht ist durch das Anlegen einer Spannung an die Flächenelektroden veränderbar, welche zu einer Orientierungsänderung der suspendierten Partikel führt. Solche Funktionselemente sind beispielsweise aus EP 0876608 B1 und WO 2011033313 A1 bekannt.

Das elektrisch steuerbare Funktionselement kann alternativ ein elektrolumineszentes Funktionselement sein. Dabei enthält die aktive Schicht elektrolumineszente Materialen, welche anorganisch oder organisch (OLED) sein können. Durch Anlegen einer Spannung an die Flächenelektroden wird die Lumineszenz der aktiven Schicht angeregt. Solche Funktionselemente sind beispielsweise aus US 2004227462 A1 und WO 2010112789 A2 bekannt.

In einer besonders bevorzugten Ausgestaltung ist das elektrisch steuerbare Funktionselement ein elektrochromes Funktionselement. Elektochrome Funktionselemente enthalten eine aktive Schichtenfolge zwischen den Flächenelektroden (elektrochrome Schichtenfolge). Die aktive Schichtenfolge umfasst in der angegebenen Reihenfolge flächig übereinander angeordnet:
- eine Ionenspeicherschicht,
- eine Elektrolytschicht und
- eine elektrochrome Schicht.

Die elektrochrome Schicht ist eigentlicher Träger der elektrisch steuerbaren optischen Eigenschaften. Sie ist eine elektrochemisch aktive Schicht, deren Lichttransmission vom Einlagerungsgrad von Ionen abhängig ist. Die Ionen (beispielsweise H⁺-, Li⁺, Na⁺- oder K⁺-Ionen) werden in der Ionenspeicherschicht gespeichert und durch diese bereitgestellt. Die Elektrolytschicht trennt die elektrochrome Schicht räumlich von der elektrochromen Schicht und dient der Wanderung von Ionen. Wird eine Gleichspannung geeigneter Polarität an die Flächenelektroden angelegt, so wandern Ionen aus der Ionenspeicherschicht durch die Elektrolytschicht in die elektrochrome Schicht, woraufhin die optischen Eigenschaften (Farbe, Lichttransmission) der elektrochromen Schicht in Abhängigkeit vom Ausmaß der eingewanderten Ionen geändert werden. Wird Gleichspannung der entgegengesetzten Polarität an die Flächenelektroden angelegt, so wandern die Ionen zurück aus der elektrochromen Schicht durch die Elektrolyschicht in die Ionenspeicherschicht und die optischen Eigenschaften der elektrochromen Schicht ändern sich in der entgegengesetzten Art. Wird keine Spannung an die Flächenelektroden angelegt, so bleibt der momentane Zustand stabil. Geeignete elektrochrome Schichten enthalten elektrochrome Materialien, beispielsweise anorganische Oxide (wie Wolframoxid oder Vanadiumoxid), Komplexverbindungen (wie Berliner Blau) oder leitfähige Polymere (wie 3,4-Polyethylendioxythiophen (PEDOT) oder Polyanilin). Elektrochrome Funktionselemente sind beispielsweise aus WO 2012007334 A1, US 20120026573 A1, WO 2010147494 A1 und EP 1862849 A1 bekannt. Die Elektrolytschicht ist typischerweise als Film organischen oder anorganischen, elektrisch isolierenden Materials mit hoher Ionenleitfähigkeit ausgebildet, beispielsweise auf Basis von Lithiumphosphoroxynitrid. Die Ionenspeicherschicht ist entweder dauerhaft transparent (reiner Ionenspeicher) oder weist ein der elektrochromen Schicht gegensätzliches elektrochromes Verhalten auf. Ein Beispiel für einen reinen Ionenspeicher sind Schichten enthaltend ein Mischoxid aus Titan und Cer, Beispiele für anodisch elektrochrome lonenspeicherschichten sind Schichten enthaltend Iridiumoxid oder Nickeloxid.

Elektrochrome Funktionselemente sind deshalb besonders bevorzugt, weil sie verglichen mit anderen steuerbaren Funktionselemente ein langsames Schaltverhalten aufweisen. Dies hat zur Folge, dass der Benutzer im Falle eines Schaltvorgangs keine simultane und homogene Änderung der optischen Eigenschaften wahrnimmt, der Durchsichtsbereich also beispielsweise nicht simultan und homogen abgedunkelt wird. Stattdessen geht die Änderung der optischen Eigenschaften von der Stelle aus, an denen die Flächenelektroden an die Spannungsquelle angeschlossen sind, und breitet sich merklich in die übrigen Bereiche des Funktionselements aus. Diese inhomogene, bereichsweise verzögerte Änderung der optischen Eigenschaften kann dem Benutzer ungewöhnlich erscheinen und störend auffallen. Das erfindungsgemäße Muster an bedruckten Bereichen mit der teiltransparenten reflektierenden Beschichtung kann in diesem Fall dazu eingesetzt werden, die Ausbreitung der Änderung der optischen Eigenschaften gleichsam optisch zu begleiten. Durch das Muster kann eine Richtung angedeutet werden, welche mit der Richtung der Ausbreitung der Änderung der optischen Eigenschaften übereinstimmt, so dass das inhomogene, verzögerte Schaltverhalten als weniger störend, wenn nicht sogar erwünscht wahrgenommen wird. Hierfür geeignete und bevorzugte Ausgestaltungen des Musters werden an späterer Stelle diskutiert.

Die Flächenelektroden der Funktionselemente mit elektrisch steuerbaren optischen Eigenschaften sind bevorzugt transparent, was im Sinne der Erfindung bedeutet, dass sie eine Lichttransmission im sichtbaren Spektralbereich von mindestens 50% aufweisen, bevorzugt mindestens 70%, besonders bevorzugt mindestens 80%. Die Flächenelektroden sind insbesondere elektrisch leitfähige Dünnschichten oder Dünnschichtstapel. Die Flächenelektroden enthalten bevorzugt zumindest ein Metall, eine Metalllegierung oder ein transparentes leitfähiges Oxid (*transparent conducting oxide,* TCO). Die Flächenelektroden enthalten besonders bevorzugt zumindest ein transparentes leitfähiges Oxid. Die Flächenelektroden können beispielsweise auf Basis von Silber, Gold, Kupfer, Nickel, Chrom, Wolfram, Indium-Zinnoxid (*indium tin oxide,* ITO), Gallium-dotiertem oder Aluminiumdotiertem Zinkoxid und/oder Fluor-dotiertem oder Antimon-dotiertem Zinnoxid ausgebildet sein, bevorzugt auf Basis von Silber oder ITO, insbesondere ITO. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm und insbesondere von 50 nm bis 200 nm. Ist eine Dünnschicht auf Basis eines Materials ausgebildet, so bedeutet dies im Sinne der Erfindung, dass die Schicht größtenteils aus dem Material besteht (mehr als 50 Gew.-%, bevorzugt mehr als 90 Gew.- %, besonders mehr als 99 Gew.-%), wobei die Schicht in geringem Maße andere Materialen enthalten kann, beispielsweise Dotierungen.

Das Funktionselement mit elektrisch steuerbaren optischen Eigenschaften kann direkt auf der innenraumseitigen Oberfläche der Außenscheibe oder auf der außenseitigen Oberfläche der Innenscheibe ausgebildet sein. In einer bevorzugten Ausgestaltung ist das Funktionselement jedoch als Mehrschichtfolie ausgebildet. Die Mehrschichtfolie ist ein Schichtstapel, wobei die Schichten des Schichtstapels zumindest eine erste Trägerfolie, die erste Flächenelektrode, die aktive Schicht beziehungsweise die aktive Schichtenfolge, die zweite Flächenelektrode und eine zweite Trägerfolie umfassen, welche in dieser Reihenfolge flächig übereinander angeordnet sind. Die Schichten des Schichtstapels sind dauerhaft stabil miteinander verbunden, beispielsweise durch Kleben oder Lamination. Mehrschichtfolien dieser Art sind typischerweise kommerziell erhältlich und können beispielsweise durch einen Glashersteller zugekauft, in die erforderliche Größe zurechtgeschnitten und in die Verbundscheibe eingelagert werden.

Die Trägerfolien enthalten bevorzugt zumindest ein thermoplastisches Polymer beziehungsweise sind auf Basis davon ausgebildet, besonders bevorzugt Polyethylenterephthalat (PET), Polypropylen, Polyvinylchlorid, fluorinierte Ethylen-Propylene, Polyvinylfluorid oder Ethylen-Tetrafluorethylen, ganz besonders bevorzugt PET. Das ist besonders vorteilhaft im Hinblick auf die Stabilität der Mehrschichtfolie. Die Dicke jeder Trägerfolie beträgt bevorzugt von 0,05 mm bis 1 mm, besonders bevorzugt von 0,1 mm bis 0,5 mm, insbesondere von 0,1 mm bis 0,2 mm. Durch Trägerfolien mit einer solchen geringen Dicke wird zum einen vorteilhaft eine geringe Dicke der Verglasung, in der die Mehrschichtfolie eingesetzt werden soll, erreicht. Zum anderen wird ein effektiver Schutz der aktiven Schicht und der elektrisch leitfähigen Schichten gewährleistet. Die Trägerfolien werden bei dem erfindungsgemäßen Verfahren bevorzugt nicht geschädigt, das heißt die Isolierungslinie erstreckt sich nicht auf die Trägerfolien.

Die Seitenkante der Mehrschichtfolie kann versiegelt werden, beispielsweise durch Verschmelzen der Trägerfolien oder durch ein (bevorzugt polymeres) Band. So kann die aktive Schicht geschützt werden, insbesondere davor, dass Bestandteile (insbesondere Weichmacher) der Zwischenschicht einer Verbundscheibe, in welche die Mehrschichtfolie eingelagert ist, in die aktive Schicht hineindiffundieren, was zu einer Degradation des Funktionselements führen kann.

Die Mehrschichtfolie ist bevorzugt in die Zwischenschicht der Verbundscheibe eingelagert. Dazu ist jede Trägerfolie bevorzugt über mindestens eine thermoplastische Verbindungsfolie mit jeweils einer der Scheiben verbunden. Die Verbindung erfolgt unter Einwirkung von Hitze, Vakuum und/oder Druck nach an sich bekannten Verfahren. Die beiden besagten Verbindungsfolien beidseitig der Mehrschichtfolie ragen bevorzugt umlaufend über die Mehrschichtfolie hinaus. Besonders bevorzugt ist sind die Seitenkanten der Mehrschichtfolie umlaufend von einer rahmenartigen dritten thermoplastischen Verbindungsfolie umgeben. Diese weist eine Aussparung auf, in welche die Mehrschichtfolie eingelegt ist.

Die Flächenelektroden des Funktionselements mit elektrisch steuerbaren optischen Eigenschaften werden bevorzugt mittels sogenannter Stromsammelschienen (Sammelleiter, *busbars*) elektrisch kontaktiert. Diese sind bevorzugt als Streifen einer elektrisch leitfähigen Folie ausgebildet, beispielsweise einer Kupfer-Folie. Die Breite der Stromsammelschienen beträgt bevorzugt von 1 mm bis 10 mm, beispielsweise etwa 5 mm. Die Dicke der Stromsammelschienen beträgt bevorzugt von 50 µm bis 200 µm, beispielsweise etwa 90 µm.

Diese Stromsammelschienen sind bevorzugt im Randbereich des Funktionselements in direktem Berührungskontakt zu den Flächenelektroden angeordnet. Die Stromsammelschienen sind insbesondere vollständig im Maskierungsbereich der Verbundscheibe angeordnet, so dass sie nicht sichtbar sind. Die Stromsammelschienen sind ihrerseits mittels elektrischer Kabel mit der Spannungsquelle verbunden.

Das Funktionselement weist typischerweise eine im Wesentlichen polygonale Form auf, die sich nach der Form der Verbundscheibe richtet, beispielsweise im Wesentlichen die Form eines Rechtecks, eines Dreiecks oder eines Trapezes. Die Form kann leichte Abweichungen gegenüber dem streng geometrischen Polygon aufweisen, beispielsweise können die Seiten leicht gekrümmt sein statt gerade. Die umlaufende Seitenkante des Funktionselements weist aber mehrere Abschnitte auf, die gerade oder leicht gekrümmt sind (die also eine konstante oder sich kontinuierlich ändernde Erstreckungsrichtung aufweisen), wobei benachbarte Abschnitte durch Ecken voneinander getrennt sind, an denen sich die Erstreckungsrichtung abrupt ändert.

Die Flächenelektroden sind bevorzugt in zumindest einem Abschnitt des umlaufenden Randbereichs des Funktionselements durch jeweils eine Stromsammelschiene elektrisch kontaktiert. Besonders bevorzugt sind dabei die Stromsammelschiene der ersten Flächenelektrode und die Stromsammelschiene der zweiten Flächenelektrode in demselben Abschnitt des umlaufenden Randbereichs und insbesondere im Wesentlichen bündig angeordnet. Ganz besonders bevorzugt sind die Stromsammelschienen entlang eines Großteils mindestens einer der Seiten der polygonalen Form angeordnet (beispielsweise entlang mindestens 80% oder mindestens 90% der besagten Seite).

In diesem Fall ist zumindest der Abschnitt des Maskierungsbereichs, in dem die Stromsammelschienen angeordnet sind, mit dem Muster von beschichteten Bereichen mit der teiltransparenten reflektierenden Beschichtung versehen. In dem besagten Abschnitt erstreckt sich das Musters bevorzugt über mindestens 80% der Breite des Maskierungsbereichs, besonders bevorzugt mindestens 90%, insbesondere im Wesentlichen die gesamte Breite. Ist das Funktionselement (und auch die Verbundscheibe) im Wesentlichen polygonal ausgebildet und die Stromsammelschienen an einer der Seiten des Polygons angeordnet, insbesondere entlang eines Großteils dieser Seite, so wird zumindest für den üblichen Fall, dass das Funktionselement vollständig innerhalb der Zwischenschicht eingelagert ist und sich nirgends bis zur Seitenkante der Verbundscheibe erstreckt, ein rahmenartiger Maskierungsbereich vorhanden sein, um die umlaufende Seitenkante des Funktionselements zu kaschieren. Dieser rahmenartige Maskierungsbereich wird, der Form der Verbundscheibe entsprechend, ebenfalls im Wesentlichen eine polygonale Form aufweisen. Das Muster beschichteter Bereiche ist dann mindestens in dem Bereich vorhanden, in dem auch die Stromsammelschienen angeordnet sind, insbesondere ist die gesamte Seite des polygonalen Maskierungsbereichs mit dem Muster versehen, in der die Stromsammelschienen angeordnet sind. Das ist insbesondere bei Funktionselementen mit vergleichsweise langsamem Schaltverhalten vorteilhaft, insbesondere also bei elektrochromen Funktionselementen, weil sich die Änderung der optischen Eigenschaften ausgehend von den Stromsammelschienen über den Durchsichtsbereich der Verbundscheibe ausbreiten. Durch das Muster bedruckter Bereiche, das den Stromsammelschienen zugeordnet ist, kann die Ausbreitungsrichtung angedeutet werden, so dass das inhomogene Schaltverhalten dem Benutzer weniger störend oder sogar erwünscht erscheint.

In einer besonders bevorzugten Ausgestaltung sind die Stromsammelschienen (vollständig oder unterbrochen) umlaufend an den Flächenelektroden angebracht. Die Stromsammelschienen sind also nicht nur an einer Seite des Funktionselements angebracht, sondern entlang des gesamten umlaufenden Randbereichs. Das ist insbesondere bei Funktionselementen mit vergleichsweise langsamem Schaltverhalten vorteilhaft, insbesondere also bei elektrochromen Funktionselementen, weil die umlaufende elektrische Kontaktierung zu einer schnelleren Änderung der optischen Eigenschaften nach einem Schaltvorgang führt. Die Änderung der optischen Eigenschaften geht dann vom umlaufenden Rand des Durchsichtsbereich aus und breitet sich in die Mitte des Durchsichtsbereich aus, was auch als "Iris-Effekt" bezeichnet wird. Die Stromsammelschienen können aus einem einzelnen umlaufenden Streifen einer elektrisch leitfähigen Folie ausgebildet werden (vollständig umlaufend, wobei eine Lücke zwischen den Enden des umlaufenden Streifens vorhanden sein kann). Die Stromsammelschienen können alternativ aber auch Lücken aufweisen (unterbrochen umlaufend). Sie können aus mehreren Streifen einer elektrisch leitfähigen Folie zusammengesetzt sein, und zwischen den Streifen können Lücken sein, insbesondere an den Ecken des polygonalen Funktionselements. Allerdings sollten mindestens 80% des umlaufenden Randbereichs der Flächenelektroden mit den Stromsammelschienen versehen sein, bevorzugt mindestens 90%, insbesondere mindestens 95%. Der Maskierungsbereich umgibt den Duchsichtsbereich rahmenartig und bedeckt die umlaufende Seitenkante des Funktionselements und die umlaufenden Stromsammelschienen. In diesem Fall ist der Maskierungsbereich vollständig umlaufend mit dem Muster von beschichteten Bereichen versehen. Durch das Muster bedruckter Bereiche, das den umlaufenden Stromsammelschienen zugeordnet ist, kann die Ausbreitungsrichtung in Richtung der Mitte des Durchsichtsbereichs angedeutet werden, so dass der Iris-Effekt dem Benutzer weniger störend oder sogar erwünscht erscheint.

Sind die umlaufenden Stromsammelschienen aus mehreren Streifen einer elektrisch leitfähigen Folie zusammengesetzt, so können die einzelnen Streifen optional unabhängig voneinander elektrisch kontaktiert sein. So können unabhängige Schaltbereiche im Durchsichtsbereich realisiert werden. Die einzelnen Streifen sind beispielsweise über dünne Drähte mit einer Steuereinheit, beispielsweise einer in die Verbundscheibe einlaminierten flexiblen Leiterplatte, verbunden. Die Drähte weisen bevorzugt einen Durchmesser von 90 µm bis 110 µm auf. Aus praktischen und elektrischen Gründen sollten die Drähte einen Abstand von mindestens 5 mm voneinander aufweisen und mindestens 6 mm von der Seitenkante der Verbundscheibe entfernt sein. Auch die Drähte sollten vollständig im Maskierungsbereich verlaufen.

Die teiltransparente reflektierende Beschichtung enthält bevorzugt ein Metalloxid. Das Metall ist dabei besonders bevorzugt ausgewählt aus der Gruppe bestehend aus Aluminium, Zinn, Titan, Kupfer, Chrom, Cobalt, Eisen, Mangan, Zirkonium, Cer, Yttrium, Silber, Gold, Platin und Palladium. Die Beschichtung kann auch Mischungen der genannten Oxide enthalten oder Mischoxide der genannten Metalle. Mit solchen Metalloxiden lassen sich optisch ansprechende teiltransparente reflektierende Eigenschaften erreichen. Der Gehalt an Metalloxid in der reflektierenden Beschichtung beträgt bevorzugt mindestens 70%, besonders bevorzugt mindestens 80%, ganz besonders bevorzugt mindestens 90%.

Die Dicke der teiltransparenten reflektierenden Beschichtung beträgt bevorzugt von 5 µm bis 50 µm, besonders bevorzugt von 8 µm bis 16 µm. Damit werden besonders gute Ergebnisse erzielt.

Die teiltransparente reflektierende Beschichtung ist bevorzugt mit einem Druckverfahren auf die beschichteten Bereiche aufgebracht, also aufgedruckt. Die Beschichtung wird dabei als Druckpaste auf die beschichteten Bereiche aufgebracht und dort getrocknet oder eingebrannt.

Besonders bevorzugt ist das Siebdruckverfahren. Dabei wird die Druckpaste durch ein feinmaschiges Gewebe hindurch gedruckt. Die Druckfarbe wird beispielsweise mit einer Gummirakel durch das Gewebe hindurchgepresst. Auf dem Gewebe ist typischerweise eine Schablone, beispielsweise aus Metall oder Kunststoff, angeordnet, welche Bereiche aufweist, die für die Druckpaste durchlässig sind, neben Bereichen, die für die Druckpaste undurchlässig sind, wodurch die geometrische Form des Drucks festgelegt wird, im vorliegenden Fall das Muster bedruckter Bereiche. Statt der Verwendung einer Schablone kann das Gewebe selbst mit durchlässigen und undurchlässigen Bereichen ausgebildet sein und somit selbst als Schablone fungieren.

Alternativ sind aber auch andere Druckverfahren anwendbar, wie Tampondruck oder Stempeldruck. Alternativ kann die Beschichtung auch manuell aufgetragen statt gedruckt werden, beispielsweise mit einem Pinsel.

Die Druckpaste enthalt neben dem reflektierenden Material (insbesondere Metalloxid) typischerweise ein Lösungsmittel. Als Lösungsmittel werden bevorzugt Alkohole, Glykole (beispielsweise Polypropylenglykole) oder Derivate davon. Die Druckpaste enthält außerdem bevorzugt ein Verdickungsmittel, beispielsweise ein Cellulosederivat oder Polyacrylsäure.

Derartige Pasten zur Herstellung von Reflexionsschichten sind im Handel erhältlich, beispielsweise von der Firma Ferro GmbH. Zudem sind solche Beschichtungen aus der Patentliteratur bekannt, beispielsweise aus WO2005063645.

Das Aufdrucken der teiltransparenten reflektierenden Beschichtung auf die Außenscheibe kann vor oder nach der Herstellung der Verbundscheibe erfolgen. Nach dem Aufdrucken der Druckpaste wird die Außenscheibe (beziehungsweise die Verbundscheibe) einer Temperaturbehandlung unterzogen, wobei das Lösungsmittel durch Verdampfen ausgetrieben wird und die Beschichtung auf der Oberfläche der Außenscheibe fixiert wird. Die Temperaturbehandlung kann auch in mehreren Schritten erfolgen, beispielsweise ein Trocknungsschritt bei 50°C bis 180°C und ein Einbrennschritt (Kalzination) bei 200°C bis 1000°C, insbesondere bei 400°C bis 700°C.

Die teiltransparente reflektierende Beschichtung ist besonders bevorzugt eine Sol-Gel-Beschichtung, wird also im Sol-Gel-Verfahren auf den beschichteten Bereichen erzeugt. Dadurch sind mechanisch und chemisch stabile Beschichtungen mit guten teiltransparenten Eigenschaften zugänglich. Zunächst wird dabei ein Sol, welches die Präkursoren der Beschichtung enthält, bereitgestellt und gereift. Die Reifung kann eine Hydrolyse der Präkursoren beinhalten und/oder eine (partielle) Reaktion zwischen den Präkursoren (insbesondere eine partielle Aggregation durch Polykondensation). Dieses Sol wird im Sinne der Erfindung als Präkursoren-Sol bezeichnet und enthält bevorzugt Metalloxid-Präkursoren in einem Lösungsmittel. Die Metalloxid-Präkursoren können beispielsweise als metallorganische Verbindungen, als Metall-Alkoholate oder als Metall-Carboxylate vorliegen. In einer bevorzugten Ausführung wird das Metall (beispielsweise des Metall-Alkoholats oder - Carboxylats) dabei durch Liganden in Form eines chemischen Komplexes stabilisiert, wodurch die Reaktivität herabgesetzt werden kann und die Beständigkeit des Sols gegen Luftfeuchtigkeit verbessert werden kann. Als Liganden sind beispielsweise 2,4-Diketone gebräuchlich.

Das Lösungsmittel des Sols ist bevorzugt Alkohol, Ether oder Glykol. Besonders bevorzugt sind Alkohole wie Ethanol, n-Propanol, Isopranol oder Butanol. Besonders bevorzugt sind außerdem Glykole wie Di-, Tri-, Tetra-, Penta- oder Hexamere von Ethylenglycol, Polypropylenglykole (beispielsweise Dipropylenglycol, Tripropylenglycol oder Tetrapropylenglycol) sowie Derivate davon. Besonders bevorzugt ist außerdem Ether wie Dimethylether oder Diethylether. Es können auch Mischungen der genannten Lösemittel verwendet werden.

Außer den Präkursoren und dem Lösungsmittel enthält das Sol bevorzugt Verdickungsmittel, besonders bevorzugt Cellulose-Derivate (wie Methyl-Cellulose oder Ethyl-Cellulose) oder Polyacrylsäuren. Durch die Verdickungsmittel kann die Viskosität des Sols angepasst werden, insbesondere im Hinblick auf den Druckprozess zum Aufbringen des Sols (als Druckpaste) auf die Scheibenoberfläche.

Es ist möglich, dass das Lösungsmittel oder das Verdickungsmittel auch als Komplexbildner für die Metalloxid-Präkursoren fungiert, wenn sie geeignet gewählt sind. In diesem Fall müssen nicht eigens zusätzliche Liganden zugesetzt werden.

Das Sol kann außerdem typische Additive enthalten, wie sie im Bereich der Sol-Gel-Technologie üblich und dem Fachmann bekannt sind.

Das Sol wird auf der außenseitigen Oberfläche der Außenscheibe abgeschieden, bevorzugt als Druckpaste aufgedruckt. Im Anschluss kann eine Trocknung erfolgen, wobei Lösungsmittel verdampft wird. Diese Trocknung kann bei Umgebungstemperatur oder durch gesonderte Beheizung erfolgen (beispielsweise mit einer Temperatur bis zu 120 °C). Vor dem Aufbringen der Lösung wird die Oberfläche typischerweise gereinigt durch an sich bekannte Verfahren.

Anschließend wird das Sol kondensiert, wodurch die erfindungsgemäße Beschichtung entsteht. Die Kondensation kann eine Temperaturbehandlung umfassen, beispielsweise bei einer Temperatur von 500 °C bis 700 °C. Dabei finden typischerweise Vernetzungsprozesse unter den Präkursoren statt, wobei sich die Präkursoren zunächst zu Aggregaten verbinden (Aggregation, typischerweise durch Hydrolyse der Präkursoren und Polykondensationsreaktionen unter ihnen) und diese anschließend zu einem Gel vernetzt werden (Gelierung). Die Aggregation kann auch schon teilweise in Lösung erfolgen, bevor diese auf die Scheibenoberfläche aufgebracht wird.

In einer besonders vorteilhaften Ausgestaltung ist die teiltransparente reflektierende Beschichtung farblich auf das Funktionselement abgestimmt, so dass die Beschichtung und das Funktionselement im abgedunkelten Zustand einen ähnlichen, idealerweise im Wesentlichen denselben Farbton aufweisen. Dies führt zu besonders ästhetischen Ergebnissen. Das ist insbesondere bei elektrochromen Funktionselementen vorteilhaft, die sich durch eine signigikante Färbung auszeichnen (verglichen beispielsweise mit SPD- oder PDLC-Funktionselementen).

In einer vorteilhaften Ausgestaltung nimmt die Belegungsdichte des Musters von beschichteten Bereichen in Richtung zum Durchsichtsbereich ab. Damit ist gemeint, das der unbeschichtete Flächenanteil des Musters in Richtung zum Durchsichtsbereich zunimmt und der beschichtete Flächenanteil in Richtung zum Durchsichtsbereich abnimmt. Dies kann dadurch realisiert werden, dass die Anzahl der beschichteten Bereiche pro Flächeneinheit in Richtung zum Durchsichtsbereich abnimmt und/oder dadurch, dass die Größe der beschichteten Bereiche in Richtung zum Durchsichtsbereich abnimmt. Die Flächenbelegung hängt als vom Abstand zum Durchsichtsbereich ab, wobei die Flächenbelegung mit wachsendem Abstand zum Durchsichtsbereich höher wird. Das ist insbesondere bei Funktionselementen mit vergleichsweise langsamem Schaltverhalten vorteilhaft, insbesondere also bei elektrochromen Funktionselementen. Bei solchen Funktionselementen wird die Änderung der optischen Eigenschaften des Durchsichtsbereichs vom Nutzer nicht als simultan-homogen wahrgenommen, sondern sie breitet sich merklich vom Rand des Durchsichtsbereichs (welcher einen geringen Abstand zur Stromsammelschiene hat) in Richtung der Scheibenmitte aus. Diese Richtung der zeitlich verzögerten Änderung der optischen Eigenschaften wird durch das inhomogene Muster beschichteter Bereiche, dessen Flächenbelegung in Richtung zum Durchsichtsbereich abnimmt, gleichsam optisch angedeutet, wodurch der Nutzer die Verzögerung als weniger störend, wenn nicht sogar als bewusst gestaltet wahrnimmt. Je nach Anwendungsfall ist es alternativ aber auch möglich, dass die Belegungsdichte des Musters von beschichteten Bereichen in Richtung zum Durchsichtsbereich zunimmt.

In einer weiteren vorteilhaften Ausgestaltung ist das Muster von beschichteten Bereichen aus Linien oder Streifen ausgebildet, welche auf den Durchsichtsbereich gerichtet ist. Anders ausgedrückt sind die beschichteten Bereiche linien- oder streifenartig ausgebildet und ihre Erstreckungsrichtung weist auf den Durchsichtsbereich. Auch diese Ausgestaltung ist bei Funktionselementen mit vergleichsweise langsamem Schaltverhalten vorteilhaft, insbesondere also bei elektrochromen Funktionselementen. Die Richtung der zeitlich verzögerten Änderung der optischen Eigenschaften wird durch die Orientierung der Linien oder Streifen gleichsam optisch angedeutet, wodurch der Nutzer die Verzögerung als weniger störend, wenn nicht sogar als bewusst gestaltet wahrnimmt.

Idealerweise sollte das Funktionselement vor ultravioletten (UV) und infraroten (IR) Anteilen der Sonnenstrahlung geschützt werden, welche zu einer Degradation desselben führen können. Der Schutz vor UV-Strahlung erfolgt bevorzugt dadurch, dass eine thermoplastische Schicht zwischen Funktionselement und Außenscheibe UV-Blocker enthält. Der Schutz vor IR-Strahlung erfolgt bevorzugt durch eine IR-reflektierende Beschichtung. Die IR-reflektierende Beschichtung kann direkt auf der Außenscheibe angeordnet sein, insbesondere auf ihrer innenraumseitigen Oberfläche. Sind sowohl ein Abdeckdruck als auch eine IR-reflektierende Beschichtung auf der innenraumseitigen Oberfläche der Innenscheibe angeordnet, so kann der Abdeckdruck optional zersetzende Eigenschaften gegenüber der IR-reflektierende Beschichtung, so dass letztere in den Bereichen des Abdeckdrucks automatisch entfernt wird. Die IR-reflektierende Beschichtung kann ober- oder unterhalb des Abdeckdrucks angeordnet sein (bezogen auf die Außenscheibe). Typische IR-reflektierende Beschichtungen sind Dünnschichtstapel mit mindestens einer Schicht auf Basis von Silber.

Die IR-reflektierende Beschichtung kann aber auch auf einer Trägerfolie bereitgestellt werden und in die Zwischenschicht eingelagert werden, zwischen Funktionselement und Außenscheibe. Dazu wird die beschichtete Trägerfolie bevorzugt zwischen zwei Verbindefolien angeordnet. Trägerfolien sind typischerweise auf Basis von PET ausgebildet und weisen eine Dicke von 20 µm bis 200 µm auf.

Die erfindungsgemäße Verbundscheibe kann hergestellt werden durch an sich bekannte Verfahren. Die Außenscheibe und die Innenscheibe werden mit den zwischen ihnen befindlichen Schichten der Zwischenschicht samt Funktionselement zu einem Schichtstapel angeordnet und miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe über die Zwischenschicht erfolgt dabei üblicherweise unter Einwirkung von Hitze, Vakuum und/oder Druck. Das Aufbringen der teiltransparenten reflektierenden Beschichtung auf die außenseitige Oberfläche der Außenscheibe kann vor oder nach der Lamination der Verbundscheibe erfolgen. Die teiltransparente reflektierende Beschichtung wird, wie bereits beschrieben, bevorzugt durch Druckverfahren aufgebracht und durch ein Sol-Gel-Verfahren gebildet.

Der Verbundscheibe kann plan sein oder in einer oder beiden Raumrichtungen gebogen, wie es insbesondere für Fahrzeugscheiben von Personenkraftwägen üblich ist. Typischerweise werden die Außenscheibe und die Innenscheibe gebogen, bevor sie zur Verbundscheibe laminiert werden. Das Aufbringen der teiltransparenten reflektierenden Beschichtung erfolgt bevorzugt vor dem Biegen der Scheiben, da die Beschichtung auf planen Scheiben einfacher auszuführen ist.

Die Erfindung umfasst außerdem die Verwendung einer erfindungsgemäßen Verbundscheibe als Fahrzeugscheibe, besonders bevorzugt als Fahrzeug-Seitenscheibe, insbesondere zu öffnende, heb- und senkbare Seitenscheibe. Da der Maskierungsbereich bei solchen Scheiben unüblich ist, wirkt sich die erfindungsgemäße teiltransparente reflektierende Beschichtung, welche ihn optisch weniger auffällig gestaltet, hier in besonderes Weise vorteilhaft aus. Die Verbundscheibe kann aber auch als eine andere Art von Fahrzeugscheibe verwendet werden, beispielsweise als Windschutzscheibe, Dachscheibe oder Heckscheibe. Ebenso ist es möglich, die Verbundscheibe im Architekturbereich zu verwenden, beispielsweise als Fensterscheibe eines Gebäudes oder Raums im Innern eines Gebäudes oder als Glasfassade.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine Draufsicht auf eine Ausgestaltung einer erfindungsgemäßen Verbundscheibe,
- Fig. 2: einen Querschnitt entlang X-X' durch die Verbundscheibe nach Figur 1,
- Fig. 3: eine Draufsicht auf das Funktionselement der Verbundscheibe nach Figur 1,
- Fig. 4: einen Querschnitt entlang Y-Y' durch das Funktionselement aus Figur 3,
- Fig. 5: eine Draufsicht auf eine weitere Ausgestaltung des Funktionselements,
- Fig. 6: eine Draufsicht auf eine weitere Ausgestaltung des Funktionselements,
- Fig. 7: eine Draufsicht auf eine Verbundscheibe mit dem Funktionselement nach Figur 6,
- Fig. 8: eine vergrößerte Ansicht des Ausschnitts Z aus Figur 1 in einer Ausgestaltung der Erfindung,
- Fig. 9: eine vergrößerte Ansicht des Ausschnitts Z in einer weiteren Ausgestaltung,
- Fig. 10: eine vergrößerte Ansicht des Ausschnitts Z in einer weiteren Ausgestaltung und
- Fig. 11: eine vergrößerte Ansicht des Ausschnitts Z in einer weiteren Ausgestaltung,

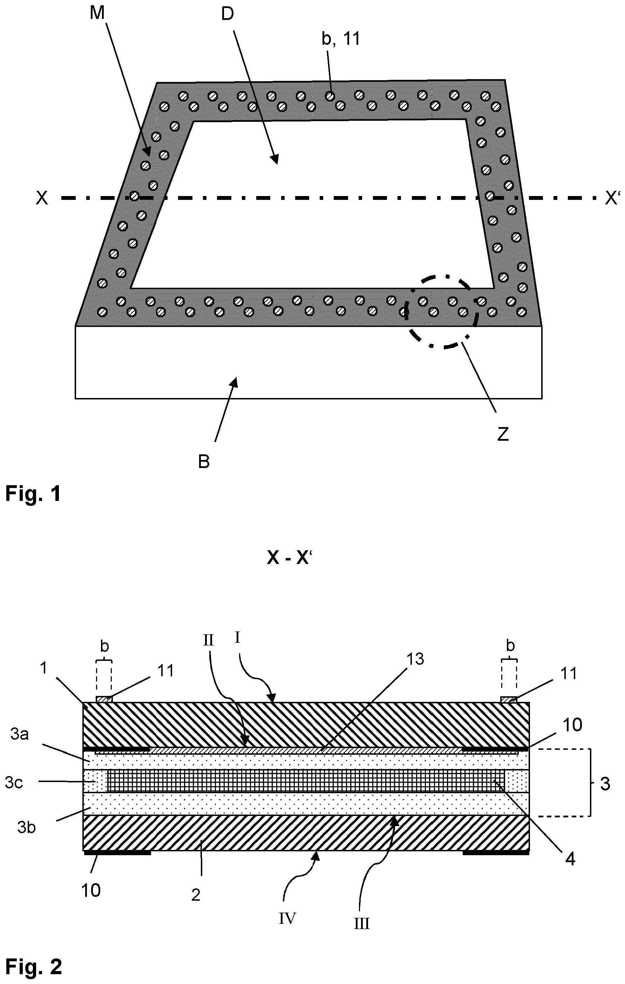

Figur 1 und Figur 2 zeigen je ein Detail einer erfindungsgemäßen Verbundscheibe. Die Verbundscheibe ist beispielhaft als zu öffnende, also heb- und senkbare Seitenscheibe eines Personenkraftwagens vorgesehen. Die Verbundscheibe umfasst eine Außenscheibe 1 und eine Innenscheibe 2, die über eine Zwischenschicht 3 miteinander verbunden sind. Die Außenscheibe 1 und die Innenscheibe 2 bestehen aus klarem Kalk-Natron-Glas mit einer Dicke von 2,1 mm. Die Außenscheibe 1 ist in Einbaulage der äußeren Umgebung zugewandt, die Innenscheibe 2 dem Fahrzeuginnenraum. Die Außenscheibe 1 weist eine außenseitige Oberfläche I und eine innenraumseitige Oberfläche II auf. Ebenso weist die Innenscheibe 2 eine außenseitige Oberfläche III und eine innenraumseitige Oberfläche IV auf. Die außenseitige Oberfläche I, III sind in Einbaulage der äußeren Umgebung zugewandt, die innenraumseitigen Oberfläche II, IV dem Fahrzeuginnenraum.

Die Verbundscheibe weist einen zentralen transparenten Durchsichtsbereich D auf und einen diesen rahmenartig umgebenden, opaken Maskierungsbereich M. Der opake Maskierungsbereich M ist durch einen Abdeckdruck 10 auf den innenraumseitigen Oberflächen II, IV der Außenscheibe 1 und der Innenscheibe 2 realisiert. Der Abdeckdruck 10 ist aus einer schwarzen Emaille ausgebildet, welche ein Schwarzpigment und Glasfritten enthält und in die Oberflächen II, IV eingebrannt ist. Der Maskierungsbereich M umgibt den im geschlossenen Zustand sichtbaren Bereich der Seitenscheibe in einem umlaufenden Randbereich. Unterhalb des Markierungsbereichs M und des Durchsichtsbereichs D weist die Verbundscheibe einen Montagebereich B auf, der stets innerhalb der Fahrzeugkarosserie angeordnet ist und der Anbindung der Verbundscheibe an den Mechanismus zum Heben und Senken derselben dient. Dazu kann der Montagebereich B nicht dargestellte Löcher und/oder Montageelemente aufweisen.

Die Zwischenschicht 3 umfasst insgesamt drei thermoplastischen Schichten 3a, 3b, 3c, die jeweils durch eine thermoplastische PVB-Folie ausgebildet sind. Die erste thermoplastische Schicht 3a ist mit der Außenscheibe 1 verbunden, weist beispielsweise eine Dicke von 0,76 mm auf und enthält UV-Blocker. Die zweite thermoplastische Schicht 3b ist mit der Innenscheibe 2 verbunden und weist beispielsweise eine Dicke von 0,38 mm auf. Die dazwischenliegende dritte thermoplastische Schicht 3c weist beispielsweise eine Dicke von 0,38 mm auf und ist mit einem Ausschnitt ausgebildet, in welchen ein Funktionselement 4 mit elektrisch steuerbaren optischen Eigenschaften im Wesentlichen passgenau, das heißt an allen Seiten etwa bündig, eingelegt ist. Die dritte thermoplastische Schicht 3c bildet also gleichsam eine Art Passepartout oder Rahmen für das etwa 0,4 mm dicke Funktionselement 4, welches sich nicht bis zu den Seitenkanten der Verbundscheibe erstreckt, sondern rundum in thermoplastisches Material eingekapselt und dadurch geschützt ist. Das Funktionselement 4 ist eine elektrochrome Mehrschichtfolie, die von einem transparenten, ungefärbten Zustand in einen gefärbten Zustand mit verminderter Lichttransmission geschaltet werden kann.

Das Funktionselement 4 deckt den Durchsichtsbereich D komplett ab und erstreckt sich in den Maskierungsbereich M, wo seine Seitenkanten angeordnet sind, so dass diese nicht sichtbar sind. Die Lichttransmission des Durchsichtsbereichs D kann durch das Funktionselement 4 vom Nutzer elektrisch gesteuert werden.

Das Funktionselement 4 ist durch die UV-blockende erste thermoplastische Schicht 3a vor UV-Strahlung geschützt. Um das Funktionselement 4 auf vor infraroten Anteilen des Sonnenlichts zu schützen, ist auf der innenraumseitigen Oberfläche II der Außenscheibe 1 eine Sonnenschutzbeschichtung 13 abgeordnet. Die Sonnenschutzbeschichtung 13 ist beispielsweise ein aufgesputterter Dünnschichtstapel mit einer oder mehreren Silberschichten. Ein umlaufender Randbereich der Außenscheibe 1 ist nicht mit der Sonnenschutzbeschichtung 13, so dass diese keinen Kontakt zur Atmosphäre hat und vor Korrosion geschützt ist. Die Seitenkanten der Sonnenschutzbeschichtung 13 sind ebenfalls im Maskierungsbereich M angeordnet.

Es sind Abwandlungen der dargestellten Ausgestaltung denkbar. So kann der Maskierungsbereich M statt durch den Abdeckdruck 10 auch durch einen opak eingefärbten Bereich mindestens einer der thermoplastischen Schichten 3a, 3b, 3c realisiert sein. Der IR-Schutz kann statt durch die Sonnenschutzbeschichtung 13 auf der Außenscheibe 1 auch durch eine IR-reflektierende Folie realisiert werden. Solche Folien bestehen beispielsweise aus einer PET-Trägerfolie mit einer IR-reflektierenden Beschichtung. Typischerweise sie die IR-reflektierende Folie zwischen zwei Schichten der Zwischenschicht 3 eingelegt, insbesondere zwischen der ersten thermoplastischen Schicht 3a und einer weiteren thermoplastischen Schicht, welche zwischen der ersten thermoplastischen Schicht 3a und der Außenscheibe 1 angeordnet ist. Die weitere thermoplastische Schicht kann beispielsweise als PVB-Folie mit einer Dicke von 0,38 mm ausgebildet sein.

Im Maskierungsbereich M ist die außenseitige Oberfläche I der Außenscheibe 1 mit einem Muster von beschichteten Bereichen b versehen, welche eine teiltransparente reflektierende Beschichtung 11 aufweisen. Die Beschichtung 11 ist eine Sol-Gel-Beschichtung, welche durch Siebdruck auf die Oberfläche I aufgebracht wurde. Sie enthält Metalloxid, beispielsweise Titanoxid, und weist eine Dicke von bevorzugt von 50 nm bis 200 nm auf, beispielsweise 70 nm auf. Das Muster mit den beschichteten Bereichen b dient dazu, den Maskierungsbereich ästhetisch ansprechender zu gestalten. Da Maskierungsbereiche für Seitenscheiben unüblich sind, nimmt der Betrachter den Maskierungsbereich M aufgrund der beschichteten Bereich b weniger störend war.

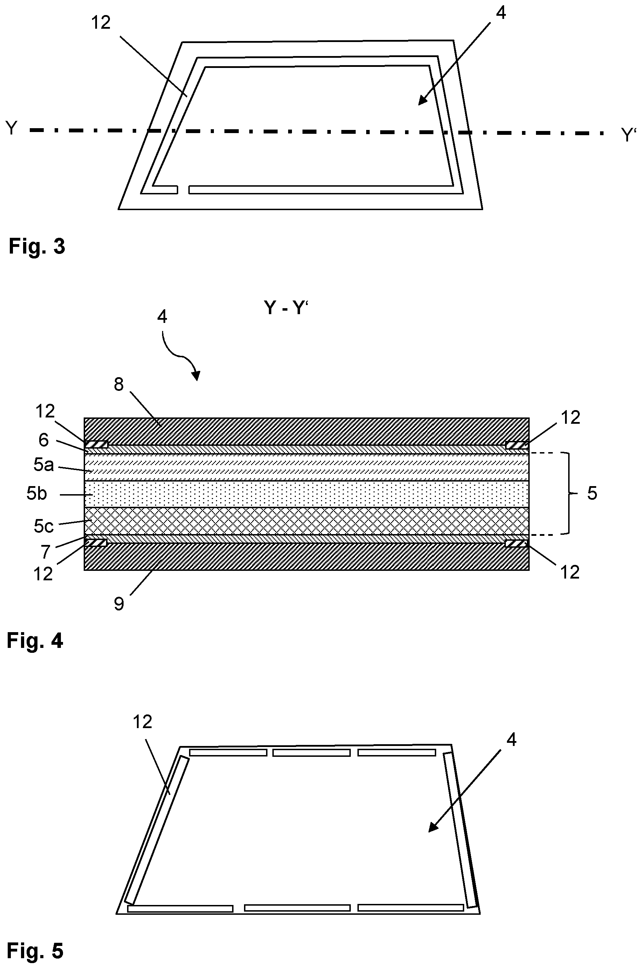

Figur 3 und Figur 4 zeigen je ein Detail des Funktionselements 4 aus Figur 1. Das Funktionselement 4 ist eine elektrochrome Mehrschichtfolie. Die Mehrschichtfolie wird begrenzt durch eine erste Trägerfolie 8 und eine zweite Trägerfolie 9. Die Trägerfolien 8, 9 bestehen aus PET und weisen eine Dicke von beispielsweise 0,125 mm auf. Die Trägerfolien 8, 9 sind jeweils mit einer Beschichtung aus ITO mit einer Dicke von etwa 100 nm versehen, welche eine erste Flächenelektroden 6 und eine zweite Flächenelektroden 7 ausbilden. Zwischen den Flächenelektroden 6, 7 ist eine aktive Schichtenfolge 5 angeordnet. Die Schichtenfolge 5 ist eine elektrochrome Schichtenfolge und besteht aus einer Ionenspeicherschicht 5a, einer Elektrolytschicht 5b und einer elektrochromen Schicht 5c. Durch eine an die Flächenelektroden 6, 7 angelegte Gleichspannung können Ionen zur Wanderung aus der Ionenspeicherschicht 5a durch die Elektrolytschicht 5b in die elektrochrome Schicht 5c und umgekehrt angeregt werden. Den Anteil an Ionen in der elektrochromen Schicht 5c bestimmt deren optische Eigenschaften, insbesondere den Lichttransmissionsgrad und die Farbe.

Beide Flächenelektroden 6, 7 sind umlaufend mit jeweils einer Stromsammelschiene 12 elektrisch kontaktiert. Die Stromsammelschienen 12 dienen dem Anschluss der Flächenelektroden 6, 7 an eine externe Spannungsquelle, um die zur Steuerung der optischen Eigenschaften erforderliche elektrische Spannung bereitzustellen. Die Stromsammelschienen 12 sind im Maskierungsbereich M angeordnet. Jede Stromsammelschiene 12 ist aus einen einzelnen Streifen einer Kupferfolie ausgebildet, welcher die jeweilige Flächenelektrode 6, 7 vollständig umläuft, wobei lediglich zwischen den Enden des Streifens eine Lücke vorhanden ist.

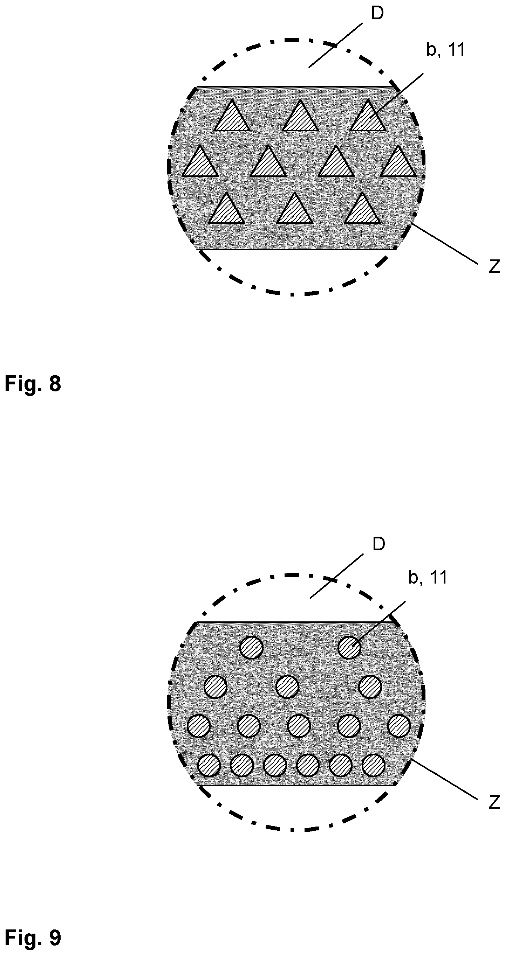

Umlaufende Stromsammelschienen 12 sind bei elektrochromen Funktionselementen 4 vorteilhaft, da diese ein vergleichsweise langsames Schaltverhalten aufweisen. Durch die umlaufende elektrische Kontaktierung wird eine schnellere Änderung der optischen Eigenschaften des Durchsichtsbereichs D erreicht. Dennoch nimmt der Betrachter die Änderung der optischen Eigenschaften nicht als homogen war - sie geht stattdessen vom Randbereich des Durchsichtsbereichs D aus und setzt sich merklich hin zum Zentrum fort. Diese Beobachtung wird auch als "Iris-Effekt" bezeichnet. Das erfindungsgemäße Muster aus bedruckten Bereichen b kann genutzt werden, um die Richtung der verzögerten Änderung der optischen Eigenschaften anzudeuten und diesen Iris-Effekt als bewusst erzeugt darzustellen, was den ästhetischen Wert der Verbundscheibe steigert. Mögliche Ausgestaltungen des Musters sind in den Figuren 8 bis 11 beispielhaft dargestellt.

Figur 5 zeigt eine weitere Ausgestaltung des Funktionselements 4 mit umlaufenden Stromsammelschienen 12. Die Stromsammelschienen 12 sind jeweils aus mehreren Streifen einer Kupferfolie zusammengesetzt, wobei sich zwischen benachbarten Streifen Lücken ausbilden können. Diese Ausführung kann gegenüber derjenigen der Figur 3 aus herstellungstechnischen Gründen bevorzugt sein. Außerdem eröffnet sie die Möglichkeit, die einzelnen Streifen der Stromsammelschienen 12 unabhängig elektrisch anzusteuern, so dass unabhängige Schaltbereiche realisiert werden, deren optische Eigenschaften unabhängig voneinander steuerbar sind.

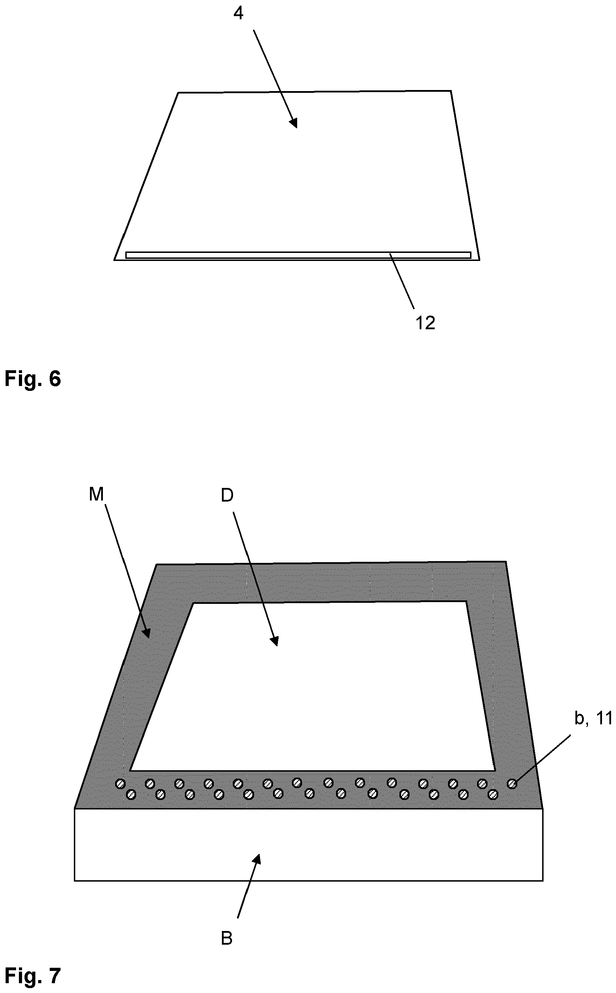

Figur 6 und Figur 7 zeigen je ein Detail einer weiteren Ausgestaltung der erfindungsgemäßen Verbundscheibe, die ebenfalls eine zu öffnende Seitenscheibe eines Personenkraftwagens ist. Figur 6 zeigt eine Draufsicht auf das Funktionselement 4 mit den Sammelschienen 12, Figur 7 eine Draufsicht auf die damit ausgestattete Verbundscheibe.

Die Ausgestaltung ist grundsätzlich ebenso aufgebaut wie diejenige der Figuren 1 bis 4. Der Unterschied liegt darin, dass die Stromsammelschienen 12 nicht umlaufend, sondern nur entlang der Unterkante des Funktionselements 4 angeordnet sind. Die Änderung der optischen Eigenschaften des elektrochromen Funktionselements 4 geht daher von der Unterkante aus und setzt sich in Richtung der Oberkante fort. In Anlehnung an den "Iris-Effekt" könnte man hier von einem "Sonnenaufgangseffekt" sprechen. Um die Richtung der verzögerten Änderung der optischen Eigenschaften anzudeuten, ist in diesem Fall nur der Abschnitt des Maskierungsbereichs M mit dem Muster aus bedruckten Bereichen b versehen, in dem die Stromsammelschienen angeordnet sind, angrenzend an die Unterkante des Durchsichtsbereich D (Ausgang der Änderung der optischen Eigenschaften). Alternativ ist es auch möglich, zusätzlich den gegenüberliegenden Abschnitt des Maskierungsbereichs M angrenzend an die Oberkante des Durchsichtsbereichs D mit dem Muster zu versehen (Endpunkt der Änderung der optischen Eigenschaften). Ebenfalls ist es alternativ auch in dieser Ausgestaltung möglich, den gesamtem Maskierungsbereichs M umlaufend mit dem Muster zu versehen.

Figur 8 zeigt den Ausschnitt Z aus Figur 1 vergrößert in einer Ausgestaltung des erfindungsgemäßen Musters von beschichteten Bereichen b. Das Muster ist homogen, das heißt die beschichteten Bereiche b sind gleichverteilt und identisch ausgebildet. Die einzelnen beschichteten Bereiche b sind beispielhaft als Dreiecke dargestellt, können aber auch beliebige andere Formen aufweisen. Das Dreieck symbolisiert eine Form mit einer Vorzugsrichtung (nach oben gerichtete Spitze des Dreiecks), welche auf den Durchsichtsbereich gerichtet ist. Dadurch kann trotz der Homogenität des Musters die Richtung der Änderung der optischen Eigenschaften angedeutet werden.

Figur 9 zeigt den Ausschnitt Z aus Figur 1 vergrößert in einer weiteren Ausgestaltung des erfindungsgemäßen Musters von beschichteten Bereichen b. Das Muster ist nicht homogen. Stattdessen nimmt die Flächenbelegung der Beschichtung 11 in Richtung zum Durchsichtsbereich D ab. Dadurch kann die Richtung der Änderung der optischen Eigenschaften angedeutet werden. Die einzelnen bedruckten Bereiche b sind identisch mit gleicher Form und Größe ausgebildet. Die Änderung der Flächenbelegung ist durch eine Abnahme der Anzahl der bedruckten Bereiche b pro Flächeneinheit in Richtung zum Durchsichtsbereich D realisiert. Die einzelnen beschichteten Bereiche b sind beispielhaft als Kreise dargestellt, können aber auch beliebige andere Formen aufweisen, beispielsweise das Firmenlogo des Fahrzeugherstellers.

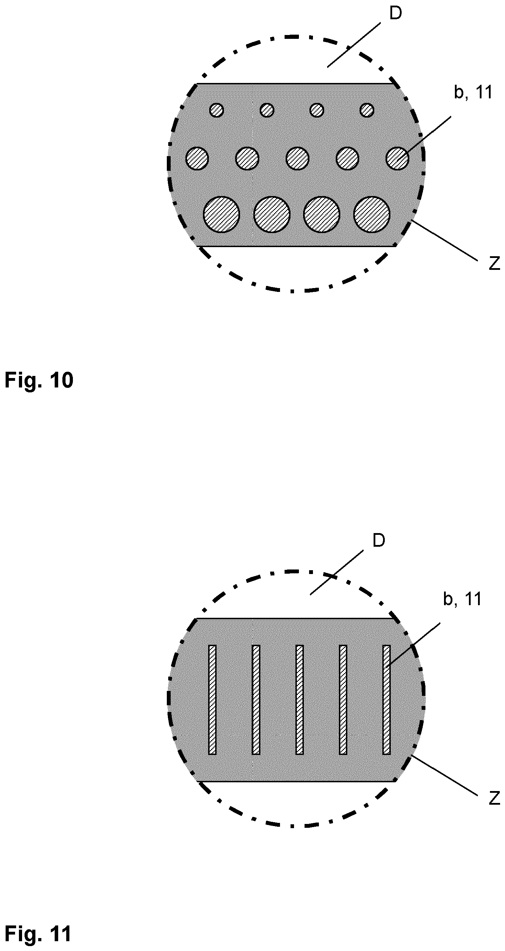

Figur 10 zeigt den Ausschnitt Z aus Figur 1 vergrößert in einer weiteren Ausgestaltung des erfindungsgemäßen Musters von beschichteten Bereichen b. Das Muster ist auch hier nicht homogen. Stattdessen nimmt die Flächenbelegung der Beschichtung 11 in Richtung zum Durchsichtsbereich D ab. Dadurch kann die Richtung der Änderung der optischen Eigenschaften angedeutet werden. Die Änderung der Flächenbelegung dadurch realisiert, dass die Größe der einzelnen bedruckten Bereiche in Richtung zum Durchsichtsbereich D geringer wird. Die einzelnen beschichteten Bereiche b sind beispielhaft als Kreise dargestellt, können aber auch beliebige andere Formen aufweisen, beispielsweise das Firmenlogo des Fahrzeugherstellers.

Figur 11 zeigt den Ausschnitt Z aus Figur 1 vergrößert in einer weiteren Ausgestaltung des erfindungsgemäßen Musters von beschichteten Bereichen b. Die einzelnen beschichteten Bereiche b sind linienartig als dünne Streifen ausgebildet, welche auf den Durchsichtsbereich D gerichtet sind. Dadurch kann die Richtung der Änderung der optischen Eigenschaften angedeutet werden.

### Bezugszeichenliste:

- (1): Außenscheibe
- (2): Innenscheibe
- (3): thermoplastische Zwischenschicht
- (3a): erste Schicht der Zwischenschicht 3
- (3b): zweite Schicht der Zwischenschicht 3
- (3c): dritte Schicht der Zwischenschicht 3
- (4): Funktionselement
- (5): aktive Schichtenfolge des Funktionselements 4
- (5a): Ionenspeicherschicht einer elektrochromen Schichtenfolge 5
- (5b): Elektrolytschicht einer elektrochromen Schichtenfolge 5
- (5c): elektrochrome Schicht einer elektrochromen Schichtenfolge 5
- (6): erste Flächenelektrode des Funktionselements 4
- (7): zweite Flächenelektrode des Funktionselements 4
- (8): erste Trägerfolie des Funktionselements 4
- (9): zweite Trägerfolie des Funktionselements 4
- (10): Abdeckdruck
- (11): teiltransparenten reflektierenden Beschichtung
- (12): Stromsammelschiene
- (13): Sonnenschutzbeschichtung

- (I): außenseitige Oberfläche der Außenscheibe 1
- (II): innenraumseitige Oberfläche der Außenscheibe 1
- (III): außenseitige Oberfläche der Innenscheibe 2
- (IV): innenraumseitige Oberfläche der Innenscheibe 2

- (M): opaker Maskierungsbereich der Verbundscheibe
- (D): transparenter Durchsichtsbereich der Verbundscheibe
- (B): Montagebereich der Verbundscheibe
- (b): beschichteter Bereich der außenseitigen Oberfläche I der Außenscheibe 1

- X - X': Schnittlinie
- Y - Y': Schnittlinie
- Z: vergrößerter Bereich

## Patentansprüche

1. Verbundscheibe, umfassend eine Außenscheibe (1) und eine Innenscheibe (2), die über eine thermoplastische Zwischenschicht (3) miteinander verbunden sind,
wobei die Verbundscheibe einen opaken Maskierungsbereich (M) und einen transparenten Durchsichtsbereich (D) aufweist,
wobei die Zwischenschicht (3) ein Funktionselement (4) aufweist, welches den gesamten Durchsichtsbereich (D) abdeckt,
wobei zumindest ein Bereich der Seitenkante des Funktionselements (4) sich nicht bis zur Seitenkante der Verbundscheibe erstreckt, sondern im Maskierungsbereich (M) angeordnet ist,
und wobei die von der Zwischenschicht (3) abgewandte Oberfläche (I) der Außenscheibe (1) im Maskierungsbereich (M) ein Muster von beschichteten Bereichen (b) aufweist, welche mit einer teiltransparenten reflektierenden Beschichtung (11) versehen sind,
wobei die teiltransparente reflektierende Beschichtung (11) einen signifikanten Anteil der auf sie treffenden elektromagnetischen Strahlung im sichtbaren Spektralbereich von 380 nm bis 780 nm transmittiert und einen ebenfalls signifikanten Anteil besagter Strahlung reflektiert, so dass die integrierte Lichttransmission und die integrierte Lichtreflexion jeweils mindestens 10% betragen, gemessen wie in der Beschreibung angegeben.

2. Verbundscheibe nach Anspruch 1, wobei der Maskierungsbereich (M) den Durchsichtsbereich (D) rahmenartig umgibt.

3. Verbundscheibe nach Anspruch 1 oder 2, wobei der Maskierungsbereich (M) durch einen Abdeckdruck (10) auf der zur Zwischenschicht (3) hingewandten Oberfläche (II) der Außenscheibe (1) ausgebildet ist oder durch eine getönte oder gefärbte Folie in der Zwischenschicht (3).

4. Verbundscheibe nach Anspruch 3, wobei das Funktionselement (4) ein elektrochromes Funktionselement ist, umfassend eine elektrochrome aktive Schichtenfolge (5) zwischen zwei Flächenelektroden (6, 7).

5. Verbundscheibe nach Anspruch 4, wobei die Flächenelektroden (6, 7) in zumindest einem Abschnitt des Randbereichs des Funktionselements (4) durch jeweils eine Stromsammelschiene (12) elektrisch kontaktiert sind, wobei die Stromsammelschienen (12) im Maskierungsbereich (M) angeordnet sind und wobei zumindest der Abschnitt des Maskierungsbereichs (M), in dem die Stromsammelschienen (12) angeordnet sind, mit dem Muster von beschichteten Bereichen (b) versehen ist.

6. Verbundscheibe nach Anspruch 4 oder 5, wobei
- die Stromsammelschienen (12) umlaufend an den Flächenelektroden (6, 7) angebracht sind,
- der Maskierungsbereich (M) den Durchsichtsbereich (D) rahmenartig umgibt und
- der Maskierungsbereich (M) umlaufend mit dem Muster von beschichteten Bereichen (b) versehen ist.

7. Verbundscheibe nach einem der Ansprüche 1 bis 6, wobei die teiltransparente reflektierende Beschichtung (11) auf die beschichteten Bereiche (b) aufgedruckt ist, bevorzugt durch ein Siebdruckverfahren.

8. Verbundscheibe nach einem der Ansprüche 1 bis 7, wobei die teiltransparente reflektierende Beschichtung (11) eine Sol-Gel-Beschichtung ist.

9. Verbundscheibe nach einem der Ansprüche 1 bis 8, wobei die teiltransparente reflektierende Beschichtung (11) Metalloxid enthält.

10. Verbundscheibe nach Anspruch 9, wobei das Metall ausgewählt ist aus der Gruppe bestehend aus Aluminium, Zinn, Titan, Kupfer, Chrom, Cobalt, Eisen, Mangan, Zirkonium, Cer, Yttrium, Silber, Gold, Platin und Palladium.

11. Verbundscheibe nach einem der Ansprüche 1 bis 10, wobei die Dicke der teiltransparenten reflektierenden Beschichtung (11) von 5 µm bis 50 µm beträgt, bevorzugt von 8 µm bis 16 µm.

12. Verbundscheibe nach einem der Ansprüche 1 bis 11, wobei die Belegungsdichte des Musters von beschichteten Bereichen (b) in Richtung zum Durchsichtsbereich (D) abnimmt.

13. Verbundscheibe nach einem der Ansprüche 1 bis 11, wobei das Muster von beschichteten Bereichen (b) aus auf den Durchsichtsbereich (D) gerichteten Linien oder Streifen ausgebildet ist.

14. Verwendung einer Verbundscheibe nach einem der Ansprüche 1 bis 13 als Fahrzeugscheibe, insbesondere als Fahrzeug-Seitenscheibe.

## Claims

1. Composite pane, comprising an outer pane (1) and an inner pane (2), which are interconnected via a thermoplastic intermediate layer (3),
wherein the composite pane has an opaque masking region (M) and a transparent see-through region (D),
wherein the intermediate layer (3) has a functional element (4) which covers the entire see-through region (D),
wherein at least one region of the side edge of the functional element (4) does not extend as far as the side edge of the composite pane but is arranged within the masking region (M),
and wherein the surface (I) of the outer pane (1) facing away from the intermediate layer (3) has a pattern of coated regions (b) in the masking region (M) which are provided with a partially transparent reflective coating (11),
wherein the partially transparent reflective coating (11) transmits a significant portion of the electromagnetic radiation incident thereon in the visible spectral range from 380 nm to 780 nm and reflects a likewise significant portion of said radiation, so that the integrated light transmission and the integrated light reflection are each at least 10%, measured as specified in the description.

2. Composite pane according to claim 1, wherein the masking region (M) surrounds the see-through region (D) in a frame-like manner.

3. Composite pane according to either claim 1 or claim 2, wherein the masking region (M) is formed by a cover print (10) on the surface (II) of the outer pane (1) facing the intermediate layer (3) or by a tinted or colored film in the intermediate layer (3).

4. Composite pane according to claim 3, wherein the functional element (4) is an electrochromic functional element comprising an electrochromic active layer sequence (5) between two planar electrodes (6, 7).

5. Composite pane according to claim 4, wherein the planar electrodes (6, 7) are electrically contacted in at least one portion of the edge region of the functional element (4) in each case by a busbar (12), wherein the busbars (12) are arranged within the masking region (M) and wherein at least the portion of the masking region (M) in which the busbars (12) are arranged is provided with the pattern of coated regions (b).

6. Composite pane according to either claim 4 or claim 5, wherein
- the busbars (12) are mounted on the periphery of the planar electrodes (6, 7),
- the masking region (M) surrounds the see-through region (D) in a frame-like manner, and
- the masking region (M) is peripherally provided with the pattern of coated regions (b).

7. Composite pane according to any of claims 1 to 6, wherein the partially transparent reflective coating (11) is printed onto the coated regions (b), preferably by a screen printing method.

8. Composite pane according to any of claims 1 to 7, wherein the partially transparent reflective coating (11) is a sol-gel coating.

9. Composite pane according to any of claims 1 to 8, wherein the partially transparent reflective coating (11) contains metal oxide.

10. Composite pane according to claim 9, wherein the metal is selected from the group consisting of aluminium, tin, titanium, copper, chromium, cobalt, iron, manganese, zirconium, cerium, yttrium, silver, gold, platinum and palladium.

11. Composite pane according to any of claims 1 to 10, wherein the thickness of the partially transparent reflective coating (11) is from 5 µm to 50 µm, preferably from 8 µm to 16 µm.

12. Composite pane according to any of claims 1 to 11, wherein the coverage density of the pattern of coated regions (b) decreases towards the see-through region (D).

13. Composite pane according to any of claims 1 to 11, wherein the pattern of coated regions (b) is formed from lines or strips directed toward the see-through region (D).

14. Use of a composite pane according to any of claims 1 to 13 as a vehicle pane, in particular as a vehicle side pane.

## Revendications

1. Vitrage feuilleté, comprenant une vitre externe (1) et une vitre interne (2), lesquelles sont reliées entre elles par l'intermédiaire d'une couche intermédiaire (3) thermoplastique,
dans lequel le vitrage feuilleté présente une zone de masquage (M) opaque et une zone de transparence (D) transparente,
dans lequel la couche intermédiaire (3) présente un élément fonctionnel (4) qui recouvre l'ensemble de la zone de transparence (D),
dans lequel au moins une zone du bord latéral de l'élément fonctionnel (4) ne s'étend pas jusqu'au bord latéral du vitrage feuilleté mais est disposée dans la zone de masquage (M),
et dans lequel la surface (I) de la vitre externe (1), laquelle surface est opposée à la couche intermédiaire (3), présente, dans la zone de masquage (M), un motif de zones revêtues (b) qui sont pourvues d'un revêtement réfléchissant partiellement transparent (11),
dans lequel le revêtement réfléchissant partiellement transparent (11) transmet une partie significative du rayonnement électromagnétique qu'il reçoit dans le domaine spectral visible allant de 380 nm à 780 nm et réfléchit une partie également significative dudit rayonnement de sorte que la transmission de lumière intégrée et que la réflexion de lumière intégrée, mesurées comme indiqué dans la description, sont respectivement d'au moins 10 %.

2. Vitrage feuilleté selon la revendication 1, dans lequel la zone de masquage (M) entoure la zone de transparence (D) à la manière d'un cadre.

3. Vitrage feuilleté selon la revendication 1 ou 2, dans lequel la zone de masquage (M) est réalisée par une impression de recouvrement (10) sur la surface (II) de la vitre externe (1), laquelle surface est orientée vers la couche intermédiaire (3), ou par un film teinté ou coloré dans la couche intermédiaire (3).

4. Vitrage feuilleté selon la revendication 3, dans lequel l'élément fonctionnel (4) est un élément fonctionnel électrochrome, comprenant une succession de couches actives électrochromes (5) entre deux électrodes plates (6, 7).

5. Vitrage feuilleté selon la revendication 4, dans lequel les électrodes plates (6, 7) sont en contact électrique dans au moins une section de la zone marginale de l'élément fonctionnel (4) par respectivement une barre omnibus de courant (12), dans lequel les barres omnibus de courant (12) sont disposées dans la zone de masquage (M) et dans lequel au moins la section de la zone de masquage (M) dans laquelle les barres omnibus de courant (12) sont disposées est pourvue du motif des zones revêtues (b).

6. Vitrage feuilleté selon la revendication 4 ou 5, dans lequel
- les barres omnibus de courant (12) sont montées de manière circonférentielle sur les électrodes plates (6, 7),
- la zone de masquage (M) entoure la zone de transparence (D) à la manière d'un cadre, et
- la zone de masquage (M) est pourvue de manière circonférentielle du motif des zones revêtues (b).

7. Vitrage feuilleté selon l'une des revendications 1 à 6, dans lequel le revêtement réfléchissant partiellement transparent (11) est imprimé sur les zones revêtues (b), de préférence par un procédé de sérigraphie.

8. Vitrage feuilleté selon l'une des revendications 1 à 7, dans lequel le revêtement réfléchissant partiellement transparent (11) est un revêtement sol-gel.

9. Vitrage feuilleté selon l'une des revendications 1 à 8, dans lequel le revêtement réfléchissant partiellement transparent (11) contient un oxyde métallique.

10. Vitrage feuilleté selon la revendication 9, dans lequel le métal est choisi dans le groupe constitué d'aluminium, étain, titane, cuivre, chrome, cobalt, fer, manganèse, zirconium, cérium, yttrium, argent, or, platine et palladium.

11. Vitrage feuilleté selon l'une des revendications 1 à 10, dans lequel l'épaisseur du revêtement réfléchissant partiellement transparent (11) va de 5 µm à 50 µm, de préférence de 8 µm à 16 µm.

12. Vitrage feuilleté selon l'une des revendications 1 à 11, dans lequel la densité d'occupation du motif des zones revêtues (b) diminue en direction de la zone de transparence (D).

13. Vitrage feuilleté selon l'une des revendications 1 à 11, dans lequel le motif des zones revêtues (b) est réalisé à partir de lignes ou de bandes dirigées vers la zone de transparence (D).

14. Utilisation d'un vitrage feuilleté selon l'une des revendications 1 à 13 en tant que vitre de véhicule, en particulier en tant que vitre latérale de véhicule.
